(19) Europäisches Patentamt
European Patent Office
Office européen des brevets

(11) **EP 1 233 249 B1**

(12) **EUROPÄISCHE PATENTSCHRIFT**

(45) Veröffentlichungstag und Bekanntmachung des Hinweises auf die Patenterteilung:
**12.09.2007   Patentblatt 2007/37**

(51) Int Cl.:
*G01C 19/56* (2006.01)   *G01P 9/04* (2006.01)

(21) Anmeldenummer: **01125719.3**

(22) Anmeldetag: **27.10.2001**

(54) **Verfahren und Vorrichtung zur Synchrondemodulation mehrfach modulierter Signale**

Method and device for synchronous demodulation of multiple modulated signals

Méthode et dispositif pour la démodulation synchrone de signaux modulés plusieurs fois

(84) Benannte Vertragsstaaten:
**DE FR GB IT**

(30) Priorität: **17.02.2001   DE 10107547**

(43) Veröffentlichungstag der Anmeldung:
**21.08.2002   Patentblatt 2002/34**

(73) Patentinhaber: **ROBERT BOSCH GMBH**
**70442 Stuttgart (DE)**

(72) Erfinder:
• **Mohaupt, Jens**
  **72124 Pliezhausen (DE)**
• **Bauer, Wolfram**
  **72074 Tübingen (DE)**

(56) Entgegenhaltungen:
**US-A- 5 672 949        US-A- 5 932 803**

Printed by Jouve, 75001 PARIS (FR)

**Beschreibung**

Stand der Technik

Die vorliegende Erfindung betrifft ein Verfahren und eine Vorrichtung zur Synchrondemodulation mehrfach modulierter Signale nach dem Oberbegriff des jeweiligen unabhängigen Anspruchs.

Ein bekannter elektromechanischer Drehratensensor, wie beispielsweise ein mikromechanischer Drehratensensor, stellt ein Feder-Masse-System dar, bei dem der Coriolis-Effekt zur Messung der Drehrate des Sensors benutzt wird. Bei einer Drehung des Sensors bzw. Systems werden die Massen des Systems ausgelenkt und die Auslenkung kapazitiv zur Bestimmung der Drehrate ermittelt. Beim Betrieb des Drehratensensors oszilliert das Feder-Masse-System des Drehratensensors mit seiner Eigenresonanzfrequenz $f_z$. Ohne die Einwirkung einer äußeren Drehrate ändert sich die Kapazität von in dem Drehratensensor vorgesehenen, sogenannten Sensierkapazitäten nicht. Wird das Feder-Masse-System bei einer Drehung des Sensors sogenannt "out of plane" ausgelenkt, ändert sich die Kapazität mit der Eigenresonanzfrequenz $f_z$. Die Amplitude dieser Schwingung ist ein Maß für die auf den Drehratensensor aktuell einwirkende äußere Drehrate.

In bekannter Weise wird die Auslenkung des Feder-Masse-Systems bei seiner Drehung aufgrund des Coriolis-Effekts über eine damit einhergehende Kapazitätsänderung von im Drehratensensor vorgesehenen Kapazitäten durch eine Kapazitäts-Spannungs-Wandlung bzw. C/U-Wandlung erfaßt.

Insbesondere aus Kostengründen, wird erfindungsgemäß ein Ladungsverstärker in sogenannter Switched-Capacitor-Technik als C/U-Wandler verwendet. Treten Kapazitätsänderungen infolge der Drehung des Sensors auf, so rufen diese Veränderungen der Spannungssprünge am Eingang dieses Ladungsverstärkers hervor. Das Ausgangssignal dieses Ladungsverstärkers $U_{OUT}$ ist proportional zum Quotienten aus der Nutzkapazität $C_{NUTZ}$ und der Rückkoppelkapazität $C_{RK}$ des betreffenden Sensors, multipliziert mit der Amplitude des hochfrequenten Spannungssprungs $U_{HF}$, d. h.

$$U_{OUT} = (C_{NUTZ} / C_{RK}) * U_{HF}$$

Damit die Signalverarbeitung des Ausgangssignals dieses Ladungsverstärkers $U_{OUT}$ in Phase mit der Eigenresonanzfrequenz $f_z$ des Feder-Masse-Systems erfolgen kann, wird eine Phasenregelschleife bzw. PLL (Phase-Locked-Loop) verwendet, die sich auf die Eigenresonanzfrequenz $f_z$ des Feder-Masse-Systems synchronisiert. Die Abtastfrequenz zur Auswertung von Kapazitätsänderungen mittels der Switched-Capacitor-Technik wird mit $f_a$ und die Modulationsfrequenz bzw. die Frequenz des hochfrequenten Spannungssprungs

$U_{HF}$ wird mit $f_{HF}$ bezeichnet.

Um einen größeren Signal-Rauschabstand zu erreichen, als es im Basisband möglich wäre, werden die Spannungssprünge, die durch die Kapazitätsänderungen hervorrufen werden, in bekannter Weise in ihrem Vorzeichen alterniert. Dadurch wird das Basisband auf die halbe Abtastfrequenz $f_a$ transformiert, d. h. auf die Frequenz $f_{HF}$ des Spannungssprungs $U_{HF}$; demnach ist $f_{HF} = f_a/2$. Bei herkömmlichen Auswertungsvorrichtungen wird die Eigenresonanzfrequenz $f_z$ des Drehratensensors als Zwischenfrequenz verwendet. In einem ersten Demodulationsschritt der Synchrondemodulation wird das Rohsignal mit der Frequenz $f_{HF}$ des Spannungssprungs $U_{HF}$ multipliziert. In einem zweiten Demodulationsschritt der Synchrondemodulation wird dann das Drehratensignal des Drehratensensors in bekannter Weise ins Basisband gefaltet. In einem anschließenden Filterschritt werden die hochfrequenten Faltungsprodukte unterdrückt und das Ausgangssignal des Filterschritts bzw. einer entsprechenden Filterstufe auf die gewünschte Bandbreite begrenzt.

Die Schrift US 5 932 803 beschreibt einen Mehrfachsensor zur Messung sowohl linearer als auch Coriolis Beschleunigungen. Offenbart ist ein Drehratensensor, dessen moduliertes Sensorsignal mit einem hochfrequenten Trägersignal nochmals moduliert wird. Dieses zweifach modulierte Sensorsignal wird durch zwei Demodulationsschritte demoduliert, nämlich erstens durch eine hochfrequente Demodulation mit einem ersten Demodulator und danach zweitens eine Antriebsfrequenz-Demodulation mit einem Sinus-Demodulator und einem Kosinus-Demodulator.

Vorteile der Erfindung

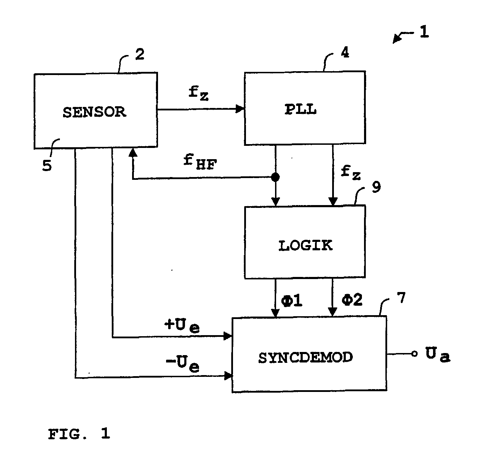

Ein wesentlicher Aspekt der Erfindung besteht darin, das hochfrequente Signal mit der Frequenz $f_{HF}$, das zur Auswertung der Kapazitätsänderung durch den Coriolis-Effekt bei der Drehung des Drehratensensors dient, mit Hilfe einer PLL als ein Vielfaches des Signals der Eigenresonanzfrequenz $f_z$ des Feder-Masse-Systems des Drehratensensors auszuführen. Hierdurch wird eine feste Abhängigkeit der Phasenlage der Signale mit den Frequenzen $f_{HF}$ und $f_z$ erreicht. Durch eine erfindungsgemäße, logische Verknüpfung dieser zwei Signale werden Signale zur Steuerung eines Synchrondemodulators generiert. Dies erfolgt mit der in Fig. 1 dargestellten, erfindungsgemäßen Schaltung. Diese erzeugt eine phasenrichtige Multiplikation der zwei Frequenzen $f_{HF}$ und $f_z$ und bewirkt eine Synchrondemodulation, die das zu erfassende Drehratensignal bzw. Drehratensignal des Drehratensensors in das Basisband transformiert.

Zur Ausführung des erfindungsgemäßen Verfahrens sind nur noch die folgenden Bauelemente erforderlich: ein Drehratensensor, eine PLL, eine Logikschaltung und ein Synchrondemodulator, wie in Fig. 1 dargestellt. Nach dem Stand der Technik sind hingegen mehrere Demodulationsstufen mit Mischern, Filtern und ggf. auch Zwischenverstärkern erforderlich. Durch die erfindungsgemäßen Maßnahmen läßt sich der Aufwand zur Synchrondemodulation im Vergleich zu herkömmlichen Lösungen nahezu halbieren, was nachfolgend anhand eines Ausführungsbeispiels detailliert erläutert wird.

Zeichnungen

Die Erfindung wird nun anhand eines Ausführungsbeispiels näher erläutert. Es zeigt:

Fig. 1    das Blockschaltbild wichtiger Komponenten einer erfindungsgemäßen Synchrondemodulationsvorrichtung zur Demodulation der von einem bekannten Drehratensensor abgegebenen mehrfach modulierten Signale;

Fig. 2    den Synchrondemodulator der in Fig. 1 dargestellten Synchrondemodulationsvorrichtung;

Fig. 3    ein Eingangssignal $+U_e$ des Synchrondemodulators der Fig. 2;

Fig. 4    das invertierte Eingangssignal $-U_e$ der Fig. 3 des Synchrondemodulators der Fig. 2;

Fig. 5    ein erstes Steuersignal $\Phi1$ zum Ein- oder Ausschalten von zwei ersten Schaltern des Synchrondemodulators der Fig. 2;

Fig. 6    ein zweites Steuersignal $\Phi2$ zum ein- oder ausschalten von zwei zweiten Schaltern des Synchrondemodulators der Fig. 2; und

Fig. 7    das Ausgangssignal $U_a$ des Synchrondemodulators der Fig. 2.

In Fig. 1 ist eine erfindungsgemäße Synchrondemolulationsvorrichtung 1 zur Bestimmung der äußeren Drehrate eines bekannten Sensors bzw. Drehratensensors 2 auf der Basis der vom Sensor abgegebenen mehrfach modulierten Signale in Form eines Blockschaltbilds dargestellt. Der Übersichtlichkeit halber zeigt das Blockschaltbild lediglich die wichtigsten zur Erläuterung der Erfindung notwendigen Komponenten der Vorrichtung 1.

Das Feder-Masse-System des Drehratensensors 2 oszilliert mit seiner Eigenresonanzfrequenz aufgrund eines dem Drehratensensor 2 zugeführten Signals. Wird das Feder-Masse-System bzw. der Drehratensensor 2 infolge einer Drehung des Drehratensensors 2 ausgelenkt, so wird dies von in dem Drehratensensor 2 vorgesehenen, sogenannten Sensierkapazitäten (nicht dargestellt) erfaßt. Das von den Kapazitäten abgegebene Signal der Eigenresonanzfrequenz $f_z$ wird in seiner Amplitude moduliert. Die Amplitudenmodulation ist ein Maß für die auf den Drehratensensor 2 einwirkende äußere Drehrate bzw. für den auf das Feder-Masse-System einwirkenden Coriolis-Effekt infolge einer Drehung des Feder-Masse-Systems und einer damit einhergehenden, sogenannten "out of plane"-Auslenkung des Feder-Masse-Systems. Aus dem Antriebskreis (nicht dargestellt) des Drehratensensors 2 wird einer Phasenregelschleife bzw. PLL 4 ein Signal mit der Eigenresonanzfrequenz $f_z$ zugeführt. Die PLL 4 synchronisiert sich auf die Eigenresonanzfrequenz $f_z$ und erzeugt ein Modulationssignal mit der Frequenz $f_{HF}$. Die Frequenz $f_{HF}$ ist ein Vielfaches der Eigenresonanzfrequenz $f_z$, wie insbesondere ein ganzzahliges Vielfaches. Im Sensor 2 wird das mit der Eigenresonanzfrequenz $f_z$ modulierte Drehratensignal mit der Modulationsfrequenz $f_{HF}$ moduliert. Dieses zweifach modulierte Signal gibt die Kapazitätsänderungen infolge der Einwirkung einer äußeren Drehrate auf den Drehratensensor 2 wieder.

Das zweifach modulierte Signal wird von einem nicht explizit dargestellten C/U-Wandler 5 in Form eines Ladungsverstärkers in Switched-Capacitor-Technik in zueinander inverse Spannungssignale $+U_e$ und $-U_e$ umgewandelt (vgl. Figuren 3 und 4). Dadurch wird das zweifach modulierte Signal mit einer Abtastfrequenz $f_a$ abgetastet, die doppelt so hoch wie die Modulations- bzw. Trägerfrequenz $f_{HF}$ ist. Dies geschieht, um einen größeren Signal-/Rauschabstand zu erreichen, als es im Basisband möglich wäre.

Die zueinander inversen Signale $+U_e$ und $-U_e$ liegen zeitdiskret am Eingang des Synchrondemodulators 7 an, wie aus den Figuren 1, 3 und 4 ersichtlich. Der Übersichtlichkeit halber ist in den Figuren 3 und 4 die Frequenz $f_{HF}$ des von der PLL bereitgestellten Modulations- bzw. Trägersignals lediglich als Vierfaches der Eigenresonanzfrequenz $f_z$ des Sensors gewählt. Man erkennt in den Figuren 3 und 4 das mit der Eigenresonanzfrequenz des Sensors modulierte Drehratensignal als Einhüllende der Pulse. Deren Amplitude ist proportional zu der jeweils aktuellen äußeren Drehrate.

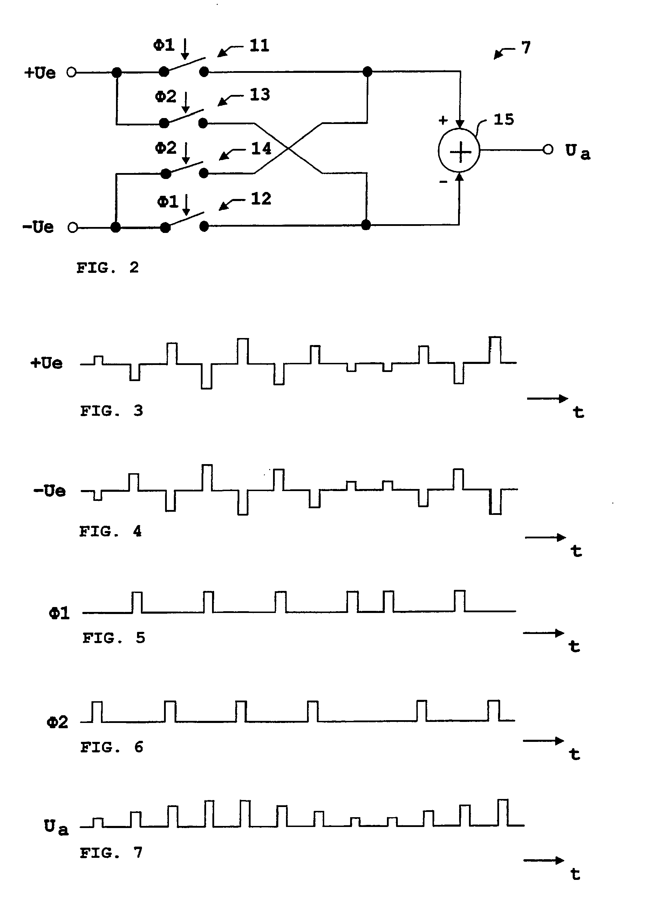

Die PLL 4 führt der Logikschaltung 9 die Modulationsfrequenz $f_{HF}$ und die von den Kapazitäten des Drehratensensors 2 abgegriffene amplitudenmodulierte Eigenresonanzfrequenz $f_z$ zu. Die Logikschaltung 9 generiert in einer für den Fachmann leicht realisierbaren Weise die in den Figuren 5 und 6 dargestellten Steuersignale $\Phi1$ und $\Phi2$. Aus einem Vergleich der Figuren 4 und 5 ist ersichtlich, daß das Steuersignal $\Phi1$ stets dann ein hohes Spannungsniveau aufweist, d.h. ein Einschaltsignal für einen der nachfolgend beschriebenen elektronischen Schalter, wenn das Spannungssignal $-U_e$ einen positiven Wert annimmt. Ferner ist aus einem Vergleich der Figuren 3 und 6 ersichtlich, daß das Steuersignal $\Phi2$ stets dann auf einem hohen Spannungsniveau ist, d.h. ein Einschaltsignal für einen elektronischen Schalter, wenn das Spannungssignal $+U_e$ einen positiven Wert annimmt. Ein Null-Niveau der Steuersignale $\Phi1$ und $\Phi2$ stellt ein Ausschaltsignal für die nachfolgend beschriebenen elektronischen Schalter dar.

Fig. 2 zeigt den Synchrondemodulator 7 der Fig. 1 in detaillierterer Darstellung. Der Synchrondemodulator 7 weist die elektronischen Schalter 11, 12, 13 und 14 sowie einen Summierer 15 auf. Der mit dem Spannungssignal $+U_e$ beaufschlagte Eingang des Synchrondemodulators 7 ist jeweils mit dem Eingang der Schalter 11 und 13 verbunden. Der mit dem zu dem Spannungssignal $+U_e$ inversen Spannungssignal $-U_e$ ist jeweils mit dem Eingang der Schalter 12 und 14 verbunden. Der Ausgang des Schalters 11 ist mit dem Ausgang des Schalters 14 und einem ersten Eingang des Summierers 15 verbunden. Der Ausgang des Schalters 13 ist mit dem Ausgang des Schalters 12 und dem zweiten Eingang des Summierers 15 verbunden. Die Schalter 11 und 12 werden von dem Steuersignal Φ1 und die Schalter 13 und 14 von dem Steuersignal Φ2 in der in den Figuren 5 und 6 gezeigten Weise geöffnet oder geschlossen.

Am Ausgang des Summierers 15 gibt der Synchrondemodulator 7 dann das in Fig. 7 dargestellte Ausgangssignal $U_a$ ab. Eine anschließende Mittelwertbildung des Ausgangssignals $U_a$ durch Tiefpaßfilterung (nicht dargestellt) führt direkt zu dem Drehratensignal im Basisband, das proportional zur Amplitude des zuvor mit $f_{HF}$ und $f_z$ modulierten Signals ist.

Grundvoraussetzung für die Funktion des beschriebenen, erfindungsgemäßen Verfahrens ist, daß die PLL 4 eine zeitlich feststehende Phasenbeziehung zwischen den Frequenzen $f_z$ und $f_{HF}$ einstellt.

Um mit Hilfe einer PLL ein Ausgangssignal der Frequenz $f_{HF}$ mit der $2^n$-fachen Frequenz des Eingangssignals der Frequenz $f_z$ zu generieren, wird ein spannungsgeregelter Oszillator bzw. VCO (Voltage Controlled Oscillator) verwendet, der auf der $2^n$-fachen Frequenz des Eingangssignals schwingt. Eine anschließende Frequenzteilung um den Faktor $1/2^n$ ermöglicht es, das so entstandene Signal im herkömmlichen Sinne in der PLL weiter zu verarbeiten. Es gilt: n = 1,2,3, etc., vorzugsweise ist n mindestens 2.

So kann durch einen einzigen erfindungsgemäßen Synchrondemodulator 7 gemäß Fig. 2 bzw. durch das erfindungsgemäße Verfahren die Demodulation des zweifach modulierten Signals in einem Schritt direkt in das Basisband erfolgen.

Bezugszeichenliste:

| | |
|---|---|
| 1 | Synchrondemolulationsvorrichtung |
| 2 | Drehratensensor |
| $f_z$ | Eigenresonanzfrequenz des Drehratensensors |
| 4 | Phasenregelschleife bzw. PLL |
| $f_a$ | Abtastfrequenz des Drehratensignals |
| $f_{HF}$ | Modulationsfrequenz |
| 5 | C/U-Wandler |
| $+U_e, -U_e$ | Ausgangssignal des C/U-Wandlers |
| 7 | Synchrondemodulator |
| 9 | Logikschaltung |
| Φ1 | Steuersignal |
| Φ2 | Steuersignal |
| 11 | Schalter |
| 12 | Schalter |
| 13 | Schalter |
| 14 | Schalter |
| 15 | Summierer |
| $U_a$ | Ausgangssignal der Synchrondemolulationsvorrichtung |

**Patentansprüche**

1. Verfahren zur Synchrondemodulation des mehrfach modulierten Drehratensignals eines Drehratensensors (2),

- der ein Feder-Masse-System, das mit seiner Eigenfrequenz($f_z$) oszilliert, und mindestens einen Kondensator zur Ermittlung eines auf das Feder-Masse-System einwirkenden Coriolis-Effekts bzw. einer Drehrate aufweist,
- wobei die Drehrate mittels einer durch die Drehrate hervorgerufenen zeitlich variablen Kapazitätsänderung des mindestens einen Kondensators durch die mehrfache Demodulation eines mehrfach modulierten elektrischen Signals ermittelt wird, das ein zeitlich variables erstes elektrisches Signal ($f_{HF}$) und ein diesem überlagertes zweites elektrisches Signal mit der Eigenfrequenz ($f_z$) des Drehratensensors (2) aufweist,
- wobei die Amplitude des zweiten elektrischen Signals der zeitlich variablen Kapazitätsänderung des mindestens einen Kondensators entsprechend moduliert ist,
- wobei das mehrfach modulierte Drehratensignal in einem Synchrondemodulator demoduliert wird,
- wobei das erste und das zweite elektrische Signal zur Steuerung des Synchrondemodulators verwendet werden,

**dadurch gekennzeichnet, dass**
die Frequenz ($f_{HF}$) des ersten elektrischen Signals mit Hilfe einer PLL als ein Vielfaches der Eigenfrequenz $f_z$ des Feder-Masse-Systems des Drehratensensors ausgeführt wird, wodurch das erste elektrische Signal eine zeitlich feststehende Phasenbeziehung zu dem zweiten elektrischen Signal mit der Eigenfrequenz ($f_z$) des Drehratensensors aufweist.

2. Verfahren nach Anspruch 1, **dadurch gekennzeichnet, daß** das erste elektrische Signal ($f_{HF}$) derart erzeugt wird, daß die Frequenz des ersten Signals der $2^n$-fachen Frequenz der Eigenresonanzfrequenz ($f_z$) entspricht, wobei n = 1,2,3 etc. ist.

3. Verfahren nach Anspruch 1 oder 2, **dadurch gekennzeichnet, daß** der mindestens eine Kondensator eine erste feststehende Kondensatorelektrode und eine zweite gegenüber der ersten Kondensatorelektrode infolge der Einwirkung der Drehrate bewegte Kondensatorelektrode aufweist, wodurch sich seine Kapazität ändert.

4. Verfahren nach Anspruch 3, **dadurch gekennzeichnet, daß** das mehrfach modulierte elektrische Signal einem Kapazitäts-Spannungswandler zugeführt wird, der aufgrund der durch diezeitlich variable Kapazität des mindestens einen Kondensators hervorgerufenen Amplitudenmodulation des zweiten elektrischen Signals ein zeitlich variables Spannungssignal abgibt.

5. Verfahren nach Anspruch 1 oder 2, **dadurch gekennzeichnet, daß** der mindestens eine Kondensator zwei feststehende Kondensatorelektroden und eine infolge der Einwirkung der Drehrate bewegte Kondensatorelektrode aufweistund sich die bewegte Kondensatorelektrode auf die erste der zwei feststehenden Kondensatorelektroden zu und gleichzeitig von der zweiten feststehenden Kondensatorelektrode weg bewegt, wobei die bewegte Kondensatorelektrode zwei zeitlich variable und zueinander inverse Kapazitätsänderungen hervorruft

6. Verfahren nach Anspruch 5, **dadurch gekennzeichnet, daß** das zweite elektrische Signal, das dem ersten elektrischen Signal ($f_{HF}$) überlagert ist, den zwei zeitlich variablen und zueinander inversen Kapazitätsänderungen entsprechend moduliert ist und das dementsprechend gebildete mehrfach modulierte elektrische Signal einem Kapazitäts-Spannungswandler (5) zugeführt wird, der zwei zueinander inverse, zeitlich variable Spannungssignale (+Ue, -Ue) abgibt.

7. Verfahren nach Anspruch 6, **dadurch gekennzeichnet, daß** das erste der zwei zueinander inversen, zeitlich variablen Spannungssignale (+$U_e$) dem ersten Eingang eines Summierers (15) von einem ersten Steuersignal ($\Phi$1) und das zweite der zueinander inversen, zeitlich variablen Spannungssignale (-$U_e$) dem zweiten Eingang des Summierers (15) ebenfalls von dem ersten Steuersignal in einem ersten Schritt gesteuert zugeführt wird.

8. Verfahren nach Anspruch 7, **dadurch gekennzeichnet, daß** das erste der zueinander inversen, zeitlich variablen Spannungssignale (+$U_e$) dem zweiten Eingang des Summierers (15) von einem zweiten Steuersignal ($\Phi$2) und das zweite der zueinander inversen, zeitlich variablen Spannungssignale (-$U_e$) dem ersten Eingang des Summierers (15) ebenfalls von dem zweiten Steuersignal in einem zweiten Schritt gesteuert zugeführt wird.

9. Verfahren nach einem der Ansprüche 6 bis 8, **dadurch gekennzeichnet, daß** das erste Steuersignal ($\Phi$1) während derjenigen Zeitdauer ein Einschaltsignal ist, während der das zweite der zueinander inversen, variablen Spannungssignale (-$U_e$) einen positiven Spannungspuls aufweist.

10. Verfahren nach einem der Ansprüche 6 bis 8, **dadurch gekennzeichnet, daß** das zweite Steuersignal ($\Phi$2) während derjenigen Zeitdauer ein Einschaltsignal ist, während der das erste der zueinander inversen, variablen Spannungssignale (+$U_e$) einen positiven Spannungspuls aufweist.

11. Verfahren nach einem der Ansprüche 8 bis 10, **dadurch gekennzeichnet, daß** das erste Steuersignal ($\Phi$1) zwei erste elektronische Schalter (11,12) und das zweite Steuersignal ($\Phi$2) zwei zweite elektronische Schalter (13,14) öffnet oder schließt.

12. Verfahren nach einem der Ansprüche 1 bis 11, **dadurch gekennzeichnet, daß** das erste elektrische Signal ($f_{HF}$) von einer PLL (4), die vorzugsweise einen spannungsgeregelten Oszillator bzw. VCO zur Erzeugung des ersten elektrischen Signals verwendet, auf der Basis der Eigenresonanzfrequenz ($f_z$) des Drehratensensors (2) generiert wird.

13. Verfahren nach einem der Ansprüche 7 bis 12, **dadurch gekennzeichnet, daß** das erste und das zweite Steuersignal von einer Logikschaltung (9) erzeugt wird, der das erste elektrische Signal ($f_{HF}$), das zweite elektrische Signal ($f_z$) und die zwei zueinander inversen, zeitlich variablen Spannungssignale (+$U_e$, -$U_e$) zugeführt werden.

14. Verfahren nach einem der vorstehenden Ansprüche, **dadurch gekennzeichnet, daß** der Kapazitäts-Spannungswandler (5) durch einen Ladungsverstärker, insbesondere in Switched-Capacitor-Technik, gebildet wird.

15. Verfahren nach einem der vorstehenden Ansprüche, **dadurch gekennzeichnet, daß** die zwei Steuersignale ($\Phi$1, $\Phi$2) und die zueinander inversen Spannungssignale (+$U_e$, -$U_e$) einem Synchrondemodulator (7) zugeführt werden, der vier von den Steuersignalen gesteuerte elektronische Schalter (11,12,13,14) und einen Summierer (15) aufweist, wobei von dem Summierer ein die Drehrate des Drehratensensors (2) wiedergebendes Drehratensignal ($U_a$) oder eine Vorstufe des Drehratensignals abgegeben wird.

16. Vorrichtung zur Synchrondemodulation des mehrfach modulierten Drehratensignals eines Drehratensensors, **dadurch gekennzeichnet, daß** die Vorrichtung zur Durchführung des Verfahrens nach einem der vorstehenden Ansprüche modifiziert worden ist.

17. Vorrichtung nach Anspruch 16, **gekennzeichnet durch** einen Kapazitäts-Spannungswandler (5), insbesondere einen Ladungsverstärker in Switched-Capacitor-Technik, eine PLL (4), eine Logikschaltung (9) und einen Synchrondemodulator (7).


**Claims**

1. Method for synchronous demodulation of the rotation-rate signal, which has multiple modulation, of a rotation-rate sensor (2),

    - which has a spring mass system, which oscillates at its natural frequency ($f_Z$), and has at least one capacitor in order to determine a Coriolis effect or the rotation rate acting on the spring mass system,
    - with the rotation rate being determined by means of a capacitance change, which is caused by the rotation rate and varies over time, of the at least one capacitor by means of the multiple demodulation of an electrical signal which has multiple modulation, has a first electrical signal ($f_{RF}$) which varies over time and a second electrical signal, superimposed on this, at the natural frequency ($f_z$) of the rotation-rate sensor (2),
    - with the amplitude of the second electrical signal being modulated if appropriate, corresponding to the capacitance change, which varies over time, of the at least one capacitor,
    - with the rotation-rate signal, with multiple modulation, being demodulated in a synchronous demodulator, and
    - with the first and the second electrical signal being used to control the synchronous demodulator,

    **characterized in that**
    the frequency ($f_{RF}$) of the first electrical signal is configured with the aid of a PLL as a multiple of the natural frequency $f_Z$ of the spring and mass system of the rotation-rate sensor, as a result of which the first electrical signal has a fixed time phase relationship with the second electrical signal, with the natural frequency ($f_Z$) of the rotation-rate sensor.

2. Method according to Claim 1, **characterized in that** the first electrical signal ($f_{RF}$) is produced in such a manner that the frequency of the first signal corresponds to the $2^n$-times the frequency of the natural resonant frequency ($f_z$), where n = 1,2,3 etc.

3. Method according to Claim 1 or 2, **characterized in that** the at least one capacitor has a first stationary capacitor electrode and a second capacitor electrode which can move with respect to the first capacitor electrode as a consequence of the influence of the rotation rate, as a result of which its capacitance varies.

4. Method according to Claim 3, **characterized in that** the electrical signal with multiple modulation is supplied to a capacitance/voltage converter, which emits a voltage signal which varies over time, on the basis of the amplitude modulation of the second electrical signal resulting from the capacitance, which varies over time, of the at least one capacitor.

5. Method according to Claim 1 or 2, **characterized in that** the at least one capacitor has two stationary capacitor electrodes and one capacitor electrode which is moved as a result of the influence of the rotation rate, and the moving capacitor electrode moves towards the first of the two stationary capacitor electrodes while at the same time moving away from the second stationary capacitor electrode, with the moving capacitor electrode causing two capacitance changes, which vary over time and are the inverse of one another.

6. Method according to Claim 5, **characterized in that** the second electrical signal, which is superimposed on the first electrical signal ($f_{RF}$), is modulated in a corresponding manner to the capacitance changes which vary over time and are the inverse of one another, and the accordingly formed electrical signal with multiple modulation is supplied to a capacitance/voltage converter (5), which emits two voltage signals (+Ue, -Ue) which are the inverse of one another and vary over time.

7. Method according to Claim 6, **characterized in that** the first of the two voltage signals ($+U_e$) which are the inverse of one another and vary over time is supplied to the first input of an adder (15) controlled by a first control signal ($\Phi$1) and the second of the voltage signals ($-U_e$) which are the inverse of one another and vary over time is supplied to the second input of the adder (15), likewise controlled by the first control signal, in a first step.

8. Method according to Claim 7, **characterized in that** the first of the voltage signals ($+U_e$) which are the inverse of one another and vary over time is supplied to the second input of the adder (15), controlled by a second control signal ($\Phi$2) and the second of the voltage signals ($-U_e$) which are the inverse of one another and vary over time is supplied to the first input of the adder (15), likewise controlled by the second control signal, in a second step.

**9.** Method according to one of Claims 6 to 8, **characterized in that** the first control signal ($\Phi 1$) is a switch-on signal during that time period during which the second of the variable voltage signals ($-U_e$) which are the inverse of one another has a positive voltage pulse.

**10.** Method according to one of Claims 6 to 8, **characterized in that** the second control signal ($\Phi 2$) is a switch-on signal during that time period during which the first variable voltage signals ($+U_e$) which are the inverse of one another has a positive voltage pulse.

**11.** Method according to one of Claims 8 to 10, **characterized in that** the first control signal ($\Phi 1$) opens or closes two first electronic switches (11, 12), and the second control signal ($\Phi 2$) opens or closes two second electronic switches (13, 14).

**12.** Method according to one of Claims 1 to 11, **characterized in that** the first electrical signal ($f_{RF}$) is generated by a PLL (4), which preferably uses a voltage-controlled oscillator or VCO to produce the first electrical signal, on the basis of the natural resonant frequency ($f_Z$) of the rotation-rate sensor (2).

**13.** Method according to one of Claims 7 to 12, **characterized in that** the first and the second control signal are produced by a logic circuit (9), to which the first electrical signal ($f_{RF}$), the second electrical signal ($f_Z$) and the two voltage signals ($+U_e$, $-U_e$) which are the inverse of one another and vary over time are supplied.

**14.** Method according to one of the preceding claims, **characterized in that** the capacitance/voltage converter (5) is formed by a charge amplifier, in particular using switched-capacitor technology.

**15.** Method according to one of the preceding claims, **characterized in that** the two control signals ($\Phi 1$, $\Phi 2$) and the voltage signals ($+U_e$, $-U_e$) which are the inverse of one another are supplied to a synchronous demodulator (7), which has four electronic switches (11, 12, 13, 14), which are controlled by the control signals, and an adder (15), with the adder emitting a rotation-rate signal ($U_a$), which reflects the rotation rate of the rotation-rate sensor (2), or an initial stage of the rotation-rate signal.

**16.** Apparatus for synchronous demodulation of the rotation rate signal with multiple modulation of a rotation-rate sensor, **characterized in that** the apparatus has been modified to carry out the method according to one of the preceding claims.

**17.** Apparatus according to Claim 16, **characterized by** a capacitance/voltage converter (5), in particular a charge amplifier using switched-capacitor technology, a PLL (4), a logic circuit (9) and a synchronous demodulator (7).

**Revendications**

**1.** Procédé de démodulation synchrone d'un signal de rotation modulé plusieurs fois, fourni par un capteur de vitesse de rotation (2), comprenant

- un système ressort-masse oscillant à sa fréquence propre ($f_z$) et au moins un condensateur pour déterminer l'effet de Coriolis ou d'une vitesse de rotation agissant sur le système ressort-masse,
- la vitesse de rotation se déterminant à l'aide d'une variation de capacité, dans le temps, engendrée par la vitesse de rotation, d'au moins un condensateur par démodulation multiple d'un signal électrique modulé plusieurs fois, ayant un premier signal électrique ($f_{HF}$) variable dans le temps et un second signal électrique à la fréquence propre ($f_z$) du capteur de vitesse de rotation (2), combiné au premier signal,
- l'amplitude du second signal électrique étant modulée en fonction de la variation de capacité dans le temps, du condensateur,
- le signal de vitesse de rotation, modulé plusieurs fois étant démodulé dans un démodulateur synchrone,
- le premier et le second signal électrique servant à commander le démodulateur synchrone,

**caractérisé en ce que**
la fréquence ($f_{HF}$) du premier signal électrique est obtenue à l'aide d'un circuit PLL comme multiple de la fréquence propre ($f_z$) du système ressort-masse du capteur de vitesse de rotation,
le premier signal électrique ayant une phase fixe dans le temps par rapport au second signal électrique à la fréquence propre ($f_z$) du capteur de vitesse de rotation.

**2.** Procédé selon la revendication 1,
**caractérisé en ce qu'**
on génère le premier signal électrique ($f_{HF}$) pour que sa fréquence corresponde à $2^n$ fois la fréquence de résonance propre ($f_z$), n = 1,2,3 etc...

**3.** Procédé selon l'une quelconque des revendications 1 ou 2,
**caractérisé en ce que**
le condensateur a une première électrode fixe et une seconde électrode mobile par rapport à la première électrode sous l'effet de la vitesse de rotation, ce qui modifie sa capacité.

**4.** Procédé selon la revendication 3, **caractérisé en ce que** le signal électrique à modulation multiple est appliqué à un convertisseur capacité-tension qui sous l'effet de la modulation d'amplitude du second signal électrique par la capacité variable dans le temps, engendrée par un condensateur, donne un signal de tension variable dans le temps.

**5.** Procédé selon l'une quelconque des revendications 1 ou 2, **caractérisé en ce qu'** au moins un condensateur comporte deux électrodes de condensateur, fixes et une électrode mobile par effet de la vitesse de rotation, et l'électrode mobile du condensateur se rapprochant de la première des deux électrodes fixes tout en s'écartant de la seconde des deux électrodes fixes, l'électrode mobile du condensateur engendrant deux variations de capacité, en sens inverse l'une par rapport à l'autre, en fonction du temps.

**6.** Procédé selon la revendication 5, **caractérisé en ce que** le second signal électrique combiné au premier signal électrique ($f_{HF}$) est modulé en fonction des deux variations de capacité inverses, variables dans le temps, et le signal électrique à modulation multiple formé de manière correspondante est appliqué à un convertisseur capacité-tension (5) qui fournit deux signaux de tension variables dans le temps, inverses l'un par rapport à l'autre ($+U_e$, $-U_e$).

**7.** Procédé selon la revendication 6, **caractérisé en ce que** dans une première étape le premier ($+U_e$) des deux signaux de tension variables dans le temps, inverses l'un par rapport à l'autre est appliqué à la première entrée d'un additionneur (15) par un premier signal de commande ($\Phi1$) et le second ($-U_e$) des deux signaux de tension variables dans le temps, inverses l'un par rapport à l'autre est appliqué à la seconde entrée de l'additionneur (15) également par le premier signal de commande.

**8.** Procédé selon la revendication 7, **caractérisé en ce que** dans une seconde étape le premier ($+U_e$) des signaux de tension variables dans le temps, inverses l'un par rapport à l'autre est appliqué de façon commandée à la seconde entrée de l'additionneur (15) par un second signal de commande ($\Phi2$) et le second ($-U_e$) des deux signaux de tension, variables dans le temps, inverses l'un par rapport à l'autre est appliqué à la première entrée de l'additionneur (15) également par le second signal de commande.

**9.** Procédé selon l'une quelconque des revendications 6 à 8, **caractérisé en ce que** le premier signal de commande ($\Phi1$) est un signal de branchement pendant la durée au cours de laquelle le second ($-U_e$) des signaux de tension variables, inverses l'un par rapport à l'autre a une impulsion de tension positive.

**10.** Procédé selon l'une quelconque des revendications 6 à 8, **caractérisé en ce que** le second signal de commande ($\Phi2$) est un signal de branchement pendant la durée au cours de laquelle le premier ($+U_e$) des deux signaux de tension variables inverses l'un par rapport à l'autre a une impulsion de tension positive.

**11.** Procédé selon l'une quelconque des revendications 8 à 10, **caractérisé en ce que** le premier signal de commande ($\Phi1$) ouvre ou ferme deux premiers commutateurs électroniques (11, 12) et le second signal de commande ($\Phi2$) ouvre ou ferme deux seconds commutateurs électroniques (13, 14).

**12.** Procédé selon l'une quelconque des revendications 1 à 11, **caractérisé en ce que** le premier signal électrique ($f_{HF}$) est généré par un circuit PLL (4) utilisant de préférence un oscillateur régulé en tension ou oscillateur VCO, en fonction de la fréquence de résonance propre ($f_z$) du capteur de vitesse de rotation (2).

**13.** Procédé selon l'une quelconque des revendications 7 à 12, **caractérisé en ce que** le premier et le second signal de commande sont générés par un circuit logique (9) qui reçoit le premier signal électrique ($f_{HF}$), le second signal électrique ($f_z$) et les deux signaux de tension ($+U_e$, $-U_e$), variables dans le temps, inverses l'un par rapport à l'autre.

**14.** Procédé selon l'une quelconque des revendications précédentes, **caractérisé en ce que** le convertisseur capacité-tension (5) est formé par un amplificateur de charge notamment en technique de condensateurs commutés.

**15.** Procédé selon l'une quelconque des revendications précédentes, **caractérisé en ce que** les deux signaux de commande ($\Phi1$, $\Phi2$) et les signaux de tension ($+U_e$, $-U_e$) inverses l'un par rapport à l'autre sont appliqués à un démodulateur synchrone (7) qui a quatre commutateurs électroniques (11, 12, 13, 14) commandés par les signaux de commande et un additionneur (15), l'additionneur fournissant un signal de vitesse de rotation ($U_a$) représentant la vitesse de rotation du capteur de vitesse de rotation (2) ou un état antérieur du signal de vitesse de rotation.

**16.** Dispositif de démodulation synchrone du signal de vitesse de rotation à modulation multiple d'un capteur de vitesse de rotation,
**caractérisé en ce que**
le dispositif est conçu pour exécuter le procédé selon l'une quelconque des revendications précédentes.

**17.** Dispositif selon la revendication 16,
**caractérisé par**
un convertisseur capacité-tension (5) notamment un amplificateur de charge en technique de condensateur commuté, un circuit PLL (4), un circuit logique (9) et un démodulateur synchrone (7).

FIG. 1

FIG. 2

FIG. 3

FIG. 4

FIG. 5

FIG. 6

FIG. 7

**EP 1 233 249 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5932803 A